# EUROPEAN PATENT SPECIFICATION

(11) **EP 3 376 608 B1**
(45) Date of publication and mention of the grant of the patent: **03.12.2025**
(21) Application number: 18158712.2
(22) Date of filing: 26.02.2018
(51) Int. Cl.: H01R 13/621, H01R 13/641, F16B 2/22, F16B 37/14, F16B 1/00, F16B 41/00

(54) **CONNECTOR ASSEMBLY AND METHOD FOR ASSEMBLING THIS CONNECTOR ASSEMBLY**
VERBINDERANORDNUNG UND VERFAHREN ZUR MONTAGE DIESER VERBINDERANORDNUNG
ENSEMBLE CONNECTEUR ET PROCÉDÉ D'ASSEMBLAGE DE CET ENSEMBLE CONNECTEUR

(30) Priority: 17.03.2017 FR 1752202
(43) Date of publication of application: 19.09.2018
(73) Proprietor: Aptiv Technologies AG, 8200 Schaffhausen (CH)
(72) Inventor: FABRE, Jean, 28000 Chartres (FR); LACOTE, Stephane, 28000 Chartres (FR)
(74) Representative: INNOV-GROUP

(56) References cited:
- FR-A1- 3 013 157
- US-A- 3 555 491

## Description

The invention relates to the field of connectors, and in particular, but not exclusively, the field of electrical connectors for motor vehicles, such as for example electrical power connectors.

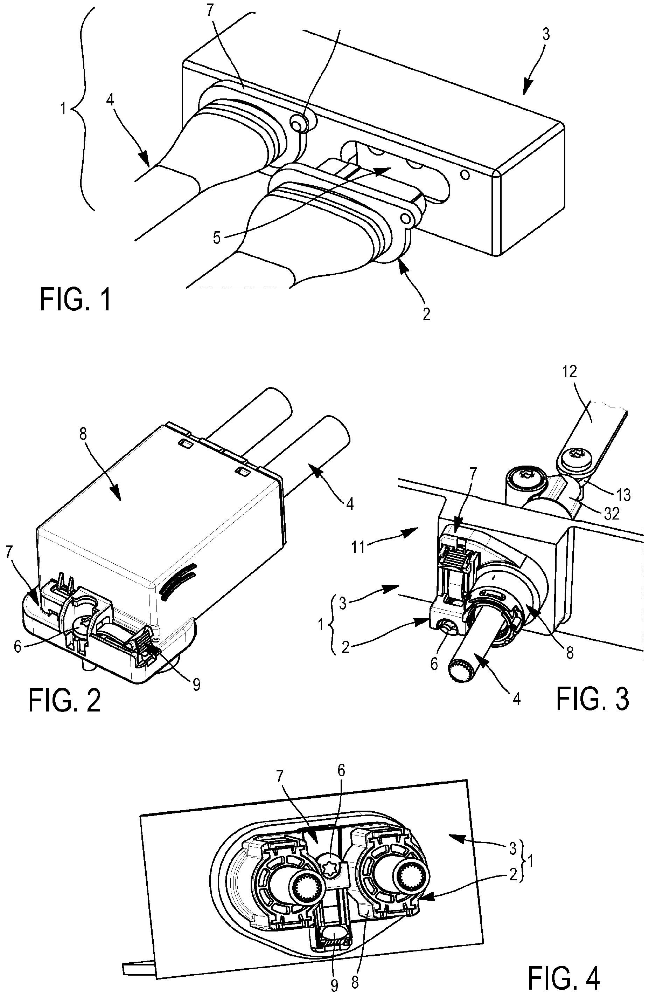

Figure 1 shows an example of a connector assembly, of the prior art, for high voltage currents. According to this example, the connector assembly 1 comprises a connector 2 and a mating connector 3. The connector 2 comprises for example pins (male contacts) connected to electrical cables 4. The mating connector 3 includes for example female contacts, into which the pins of the connector 2 must be inserted. These female contacts are electrically connected for example to electrical conducting bars ("busbars") and/or to devices 5 (current converters, motors etc.), accommodated in the mating connector 3. The connector 2 is assembled on the mating connector 3, then the connector 2 and the mating connector 3 are fastened to each other by means of screws 6 engaged in an orifice disposed in a flange 7 on the connector 2 side, before being screwed to the mating connector 3.

Fastening connectors by means of screws generally gives rise to a problem of checking that screwing is complete and sufficient. In cases where screwing might not have been achieved, or might have been achieved incompletely, the electrical connection may not be established or may be broken after a certain time due to the effect of vibration for example. Equipping assembly lines with specific checking means at the screwing tool is generally perceived as a costly investment and does not always fully resolve the problem of checking that screwing is complete. Furthermore, screw fastening is sometimes avoided, as it can take longer to accomplish than clip-on fastening for example, it also needs relatively unobstructed access to the screw etc.

However, if at least some of the abovementioned problems were resolved, screw fastening could be preferred because of the robustness of the resulting fastening. Document US3555491A discloses a connector assembly according to the preamble of claim 1 of the present application.

One aim of the invention is to provide a solution for improving checking, in an affordable, simple and reliable manner, that screwing is complete when fastening a connector to a mating connector.

This aim is partially achieved with a connector assembly according to the preamble of independent claim 1, which comprises a connector and a mating connector. This connector and this mating connector are fastened to each other by means of at least one screw. This screw includes a shank and a head. The shank is engaged in an orifice disposed in the connector and the screw head is held, by the connector, on one side of this orifice. The connector and the mating connector are in a connected position when the screw is in a position called "final fastened position", that is to say when it is screwed until \the connector and the mating connector are tightened on each other at, that is to say in the vicinity, of the screw. In other words, the final fastened position of the screw is reached when the screw is screwed to the maximum and when the distance between the screw head and the part of the mating connector on which the screw is inserted is minimum. Furthermore, the connector or the mating connector includes a button. This button constitutes means of ensuring that the screw is screwed in the final fastened position. This button is mobile, and can be moved between a first locked position and a second locked position distinct from the first locked position. In the first locked position, the button authorizes screwing or unscrewing of the screw. However, in the first locked position, the button cannot be moved if the screw is not in the final fastened position.

Thus, in the first locked position, it is only possible to move the button if the connector and the mating connector are fastened and tightened on each other by means of the screw, that is to say, when the screw is in its position called "final fastened position" in this document. In other words, the fact of being able to move the button from the first locked position to the second locked position is a true indication that the screw is in the final fastened position and that the connector and mating connectors are truly fastened and connected to each other. In this way, it is possible to check that the operation of screwing the screw has truly been accomplished to completion.

The connector assembly according to the invention further includes the technical features of the characterizing portion of independent claim 1.

Optionally, the mating connector releases the button from its first locked position when respective contacts of the connector and of the mating connector are electrically connected.

An embodiment not covered by the invention is directed to a connector including at least one orifice and a screw with a shank engaged in the orifice and a screw head held on the connector on one side of this orifice. This connector furthermore includes a button, mobile between
- a first locked position, in which it authorizes screwing or unscrewing of the screw and in which it cannot be moved if the screw is not in the final fastened position, and
- a second locked position, distinct from the first locked position.

This connector can potentially include one or other of the following characteristics, considered separately or combined:.
- it includes a housing with at least one slide;
- the button comprises
   - a slide block cooperating with the slide to guide the movement of the button, along a direction of actuation, between its first and its second locked positions,
   - a cover for masking, at least partially, when the button is in its second locked position, a recess disposed in the screw head, into which a tool can be inserted to screw or unscrew the screw, and
   - blocking means for holding the button in its first locked position;
- the blocking means are rotationally mobile around an axis perpendicular to the direction of actuation;
- the slide block is connected to a support to which the cover is connected;
- the slide block includes at least one pad engaged in a slide and an articulation between the support and the pad for allowing the support to rotate relative to the pad, around an axis perpendicular to the direction of actuation;
- the cover cooperates elastically with the screw head in order to hold the button in its second locked position; and
- the button is made from a single piece.

Another embodiment not covered by the invention is directed to a method for assembling a connector assembly comprising a connector and a mating connector, in which
- this connector and this mating connector are fastened to each other by means of at least one screw including a shank and a head,
- the shank is engaged in an orifice disposed in the connector,
- with the head being held by the connector, the screw is screwed to the mating connector until in a final fastened position, in which the connector and the mating connector are tightened on each other at the screw,
- once the screw has been screwed until in its final fastened position, a button is moved from a first locked position, in which the button authorizes screwing or unscrewing of the screw, to a second locked position, in which the button no longer authorizes screwing or unscrewing of the screw.

Other characteristics and advantages of the invention will emerge on reading the detailed description that follows, as well as on the attached drawings. On these drawings
- Figure 1 diagrammatically illustrates in perspective an example of a connector assembly of the prior art;
- Figure 2 diagrammatically illustrates in perspective a first embodiment example of the connector assembly according to the invention;
- Figure 3 diagrammatically illustrates in perspective a second embodiment example of the connector assembly according to the invention;
- Figure 4 diagrammatically illustrates in perspective a third embodiment example of the connector assembly according to the invention;
- Figure 5 diagrammatically illustrates in section the embodiment of the connector assembly illustrated on Figure 2;
- Figure 6 diagrammatically illustrates in section and in perspective a detail of the embodiment of the connector assembly illustrated on Figures 2 and 5, with the button in the first locked position;
- Figure 7 diagrammatically illustrates in section a detail of the embodiment of the connector assembly illustrated on Figures 2, 5 and 6, with the button in an unlocked position;
- Figure 8 diagrammatically illustrates in section a detail of the embodiment of the connector assembly illustrated on Figures 2, 5 to 7, with the button in a second locked position;
- Figure 9 diagrammatically illustrates in top view a detail of the embodiment of the connector assembly illustrated on Figures 2, 5 to 8, with the button in its second locked position.

In this document, the term "mating connector" generally and broadly designates any element intended to be electrically connected to a connector. It can therefore be another connector, a housing on which connection components are assembled, a wall through which an electrical connection must be made, etc.

In this document, the terms "above", "below", "upper", "lower" etc. are purely conventional and refer where applicable to the orientations as shown on the figures.

On the figures, the same reference numbers designate identical or similar elements.

Several embodiment examples of a connector assembly 1 or of a connector conforming to the invention are illustrated on Figures 2 to 4.

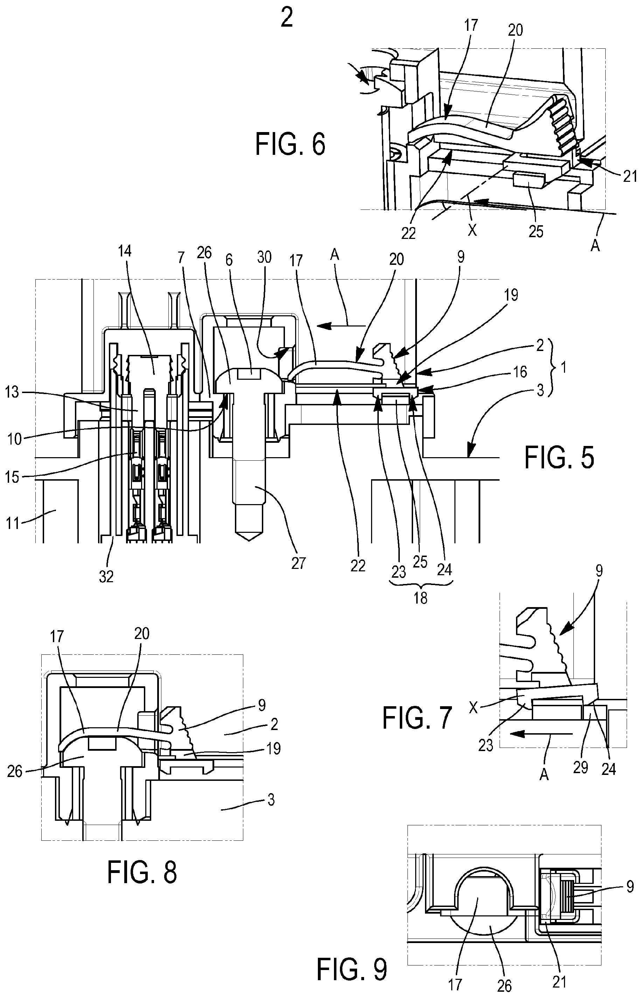

The connector illustrated on Figure 2 includes a housing 8 with a flange 7. The housing 8 encloses power contacts (not illustrated on this figure) connected to electrical cables 4, as well as contacts 13 forming part of a circuit for controlling the supply of electrical current to the power contacts (see Figure 5). A button 9 is assembled to slide on the flange 7. A screw 6 is inserted in an orifice 10 disposed in the flange 7. This embodiment will be described in more detail in relation to Figures 5 to 9.

Figure 3 illustrates a connector assembly 1 with a connector 2 and a mating connector 3. The connector 2 corresponds for example to a female contact mount, one end of which is connected to an electrical cable 4. The mating connector 3 is in two parts in this case. It includes an interface in the form of a wall 11 and a male contact mount 32. The connector 2 includes a housing 8 and a flange 7. The housing 8 passes through the wall 11. For example, the wall 11 is metal. The male contact mount 32 is fastened to the other side of the wall 11 relative to the connector 2 and partially covers the part of the housing 8 situated on the other side of the wall 11 relative to the flange 7. The male contact mount 32 accommodates a male contact 13 attached (for example screwed) to a busbar 12. In this case, the contact 13 is a power contact. The housing 8 isolates the female contact housed in the connector 2 from the wall 11. A button 9 is assembled to slide on the flange 7. A screw 6 is inserted into an orifice 10 disposed in the flange 7. The screw 6 is screwed into a threaded bore made in the wall 11 of the mating connector 3. The screw 6 passes through the flange 7 close to the portion of the housing accommodating the contact 13. In this example, the connector 2 only includes one way and one screw 6.

Figure 4 also illustrates a connector assembly with a connector 2 and a mating connector 3. In this example, the connector 2 includes two ways with contacts (not visible but similar for example to the contacts of the embodiment of Figure 3), but just one screw 6 passing through the flange 7 between the two portions of the housing 8 each respectively accommodating a contact. In this case, the contacts are power contacts. The button 9, assembled to slide on the flange 7 between these two portions of the housing 8, in this case occupies virtually no extra space on the connector 2.

Figure 5 illustrates, in section, a connector assembly 1, with the connector of Figure 2, as well as a mating connector 3 (as for the embodiments described in relation to Figures 3 and 4, the mating connector 3 includes an interface, in the form of a wall 11, and a male contact mount 32). On this figure, the connector 2 and the mating connector 3 are in the pre-coupling position. In other words, the connector 2 and the mating connector 3 are positioned one above the other (potentially, as illustrated on Figure 5, partially engaged one inside the other and with the screw partially screwed), but the contacts 13 (in this case, the contacts of a shunt 14) of the connector 2 and the contacts 15 of the mating connector 3 are not connected. In the case illustrated on Figure 5, the contacts 13 of the shunt 14 and the contacts 15 of the mating connector 3 correspond to those of a device for controlling the supply of electrical current delivered to power contacts, not illustrated. Thus, if the contacts 15 of this controlling device are not connected by the shunt 14, the connector 2 and the mating connector 3 are not supplied with high voltage current. For the connector assembly 1 to be functional, it is therefore important to be able to ensure that the connector 2 and the mating connector 3 are truly coupled.

On Figure 5, the button 9 is in its first locked position. The button 9 is made from a single moulded piece. It comprises a slide block 16, a cover 17, blocking means 18 and a support 19. The cover 17 is connected to the support 19 by a flexible strip 20. The support 19 is connected to two pads 21 (see Figure 6) situated either side of the support 19 and forming the slide block 16.

Seen from above, the slide block 16 is U-shaped, the two pads 21 each respectively corresponding to a branch of this U. The support 19 is connected to the central part of this U, situated between the branches of the U. The central part of the U is flexibly and elastically articulated on the branches of the U. The support 19 can therefore rock around an axis of articulation X (perpendicular to the plane of Figures 5 to 8, see Figure 6) and become inserted, at least partially, between the branches of the U when pressure is exerted downwards on the button 9, in order to lift the cover 17.

The pads 21 are assembled to slide each respectively in a slide 22 disposed in the housing 8. They are therefore guided in the movement, along a direction of actuation A (perpendicular to the axis of articulation X), of the button 9 between its first and second locked positions (corresponding respectively to Figures 5 and 8 for example).

The blocking means 18 are essentially in the shape of front lugs 23 and rear lugs 24 cooperating with a holding element 25, here in the form of a beam made in one piece with the housing 8. The two rear lugs 24 are situated in the extension of the branches of the U forming the slide block 16, hence essentially in the extension of the pads 21 along the direction of actuation A, but they do not cooperate with the slides 22.

On Figures 5 and 6, the button 9 is in its first locked position. In this position, with the front lugs 23 and rear lugs 24 being stopped on the holding element 25, along the direction of actuation A, the blocking means 18 hold the button 9 on the holding element 25.

The screw 6 includes a head 26 and a shank 27. The shank 27 is threaded and is screwed into a bore 28 disposed in the mating connector 3.

In the first locked position of the button 9, the cover 17 does not cover the screw head 26 and a tool can, depending on the type of screw head 26, either be inserted in a recess 31 (see Figure 6) made in the screw head 26 in order to drive the screw 6 rotationally around its longitudinal axis, or be placed on or around the screw head 26, also to drive the screw 6 rotationally around its longitudinal axis.

As the screw 6 is progressively screwed into the mating connector 3, with the head 26 being held by the flange 7, the screw 6 moves the connector 2, and the connector 2 and the mating connector 3 draw near each other.

When the screw 6 is in the final fastened position (Figures 7 to 9), the connector 2 and the mating connector 3 are tightened on each other and the mating connector 3 interacts with the button 9. More precisely, as illustrated on Figure 7, a protuberance 29 of the mating connector 3 rises towards the button 9 and moves the rear lugs 24. In this movement of the rear lugs 24, the button 9 rocks around the axis of articulation X. With the blocking means 18 being rotationally mobile around this axis of articulation X, the rear lugs 24 therefore escape from the holding element 25 and the button 9 can be moved, in the direction of actuation A, towards the screw 6, so as to bring the cover 17 above the screw head 26.

It will be noted that if the connector 2 and the mating connector 3 are coupled, but the screw 6 is not screwed to the final fastened position, the rear lugs 24 will be released from the holding element 25 , but it will not be possible to move the button 9 to its second locked position. Indeed, in order for the button 9 to be moved until in its second locked position, the end of the cover 17 must slide on the screw head 26. On one hand, this is not possible as long as the screw is not sufficiently screwed, since if it is not, the cover remains blocked either by the shank 27 or by the lower edge of the screw head 26. On the other hand, even if the end of the cover 17 starts to slide on the screw head 26, but this screw head 26 is still too high, the cover touches a bridge 30 that defines a maximum height for a movement upwards of the cover 17 and thereby forms a vertical stop for the cover 17.

When the connector 2 and the mating connector 3 are at the same time coupled and held by the screw 6 in the final fastened position, the button 9 is released from the holding element and the cover 17 can pass under the bridge 30. The button 9 can then be moved from its first locked position to its second locked position (see Figure 8). In this second locked position, the cover 17 is positioned on the screw head 26. Its curved shape, relatively complementary to the shape of the screw head 26 on one hand, and the elastic nature of the flexible strip 20, which tends to press the cover 17 on the screw head 26 on the other hand, assist with blocking and locking the button 9 in this position. The button 9 cannot be released from this position without a deliberate and appropriate action on the part of an operator to move the button 9 back to its first locked position. The operator must effectively pull the button along the direction of actuation by moving the button 9 away from the screw 6 and overcoming the force due to the fit between the respective shapes of the cover 17 on the screw head 26 and the pressure exerted by the flexible strip 20 on the cover 17. This operation makes it possible to guarantee that the button 9 can only be moved from its second locked position to its first locked position by a deliberate action.

As can be seen on Figure 9, when the button 9 is in its second locked position, the cover 17 partially covers the screw head 26 and completely covers the recess into which a tool could have been inserted to unscrew the screw 6.

Although this is not illustrated, it is understood that when the screw 6 is in the final fastened position and the connector 2 and the mating connector 3 are coupled, their respective contacts 13, 15 are connected. The shunt 14 then closes the control circuit and a current supplies the power contacts of the connector 2 and the mating connector 3.

Alternatively the button 9 can be assembled to be mobile on the mating connector 3, unblocking the button 9 to allow it to be moved from its first locked position to its second locked position is achieved by interaction with the connector 2 when the connector 2 is sufficiently close to the mating connector 3 and when the connector 2 and the mating connector 3 are in the connected position, coupled, with the screw 6 in its final fastened position.

## Claims

1. Connector assembly comprising a connector (2) and a mating connector (3), this connector (2) and this mating connector (3) being fastened to each other by means of at least one screw (6) including a shank (27) engaged in an orifice (10) disposed in the connector (2) and a screw head (26) held, by the connector (2), on one side of this orifice (10), the connector (2) and the mating connector (3) being in a connected position with the screw (6) in a final fastened position,
wherein a button (9) is assembled on the connector (2), the button (9) being mobile between a first position and a second position, **characterized in that** the button (9) comprises rear lugs (24) and **in that**
- the first position is a first locked position and in this first locked position, the button (9) authorizes screwing or unscrewing of the screw (6) and the button (9) cannot be moved if the screw (6) is not in the final fastened position, the rear lugs (24) cooperating with a holding element (25) for blocking the movement of the button (9),
- the second position is a second locked position, wherein in order for the button to be moved from the first lock position to the second locked position, the mating connector (3) interacts with the button (9) to move the rear lugs (24), so that the rear lugs (24) escape the holding element (25) allowing the button (9) to be released from its first locked position when the connector (2) and the mating connector (3) are in the connected position with the screw (6) in a final fastened position.

2. Connector assembly according to claim **1,** in which the mating connector (3) releases the button (9) from its first locked position when respective contacts (13, 15) of the connector (2) and of the mating connector (3) are electrically connected.

3. Connector assembly according to claim 1 or 2, wherein the button (9) comprises a slide block (16) cooperating with the slide (22) to guide the movement, along a direction of actuation (A), of the button (9) between its first and its second locked positions.

4. Connector assembly according to claim 3, wherein the blocking means (18) are essentially in the shape of front lugs (23) and rear lugs (24) cooperating with the holding element (25), and wherein the blocking means (18) are rotationally mobile around an axis (X) perpendicular to the direction of actuation (A).

5. Connector assembly according to any one of the preceding claims, wherein button (9) comprises a cover (17) for masking, at least partially, when the button (9) is in its second position, a recess (31) disposed in the head (26) of the screw (6), into which a tool can be inserted to screw or unscrew the screw (6), when the button (9) is in its second position.

6. Connector assembly according to one of claim 5, in which the cover (17) cooperates elastically with the head (26) of the screw (6) in order to hold the button (9) in its second position.

7. Connector assembly according to any one of the preceding claims, wherein the button (9) is made from a single piece.

## Patentansprüche

1. Steckverbinderanordnung, umfassend einen Steckverbinder (2) und einen Gegensteckverbinder (3), wobei dieser Steckverbinder (2) und dieser Gegensteckverbinder (3) mittels mindestens einer Schraube (6) aneinander befestigt sind, die einen in einer in dem Steckverbinder (2) angeordneten Öffnung (10) eingreifenden Schaft (27) und einen Schraubenkopf (26) aufweist, der von dem Steckverbinder (2) auf einer Seite dieser Öffnung (10) gehalten wird, wobei sich der Steckverbinder (2) und der Gegensteckverbinder (3) in einer verbundenen Position mit der Schraube (6) in einer endgültigen befestigten Position befinden,
wobei ein Knopf (9) an dem Steckverbinder (2) montiert ist, wobei der Knopf (9) zwischen einer ersten Position und einer zweiten Position beweglich ist, **dadurch gekennzeichnet,**
• **dass** der Knopf (9) hintere Nasen (24) umfasst und dass
• die erste Position eine erste verriegelte Position ist und in dieser ersten verriegelten Position der Knopf (9) das Anziehen oder Lösen der Schraube (6) gestattet und der Knopf (9) nicht bewegt werden kann, wenn sich die Schraube (6) nicht in der endgültigen befestigten Position befindet, wobei die hinteren Nasen (24) mit einem Halteelement (25) zum Blockieren der Bewegung des Knopfes (9) zusammenwirken,
• die zweite Position eine zweite verriegelte Position ist, wobei, damit der Knopf aus der ersten verriegelten Position in die zweite verriegelte Position bewegt werden kann, der Gegensteckverbinder (3) mit dem Knopf (9) zusammenwirkt, um die hinteren Nasen (24) zu bewegen, so dass die hinteren Nasen (24) dem Halteelement (25) entkommen, wodurch der Knopf (9) aus seiner ersten verriegelten Position gelöst werden kann, wenn sich der Steckverbinder (2) und der Gegensteckverbinder (3) in der verbundenen Position mit der Schraube (6) in einer endgültigen befestigten Position befinden.

2. Steckverbinderanordnung nach Anspruch 1, bei der der Gegensteckverbinder (3) den Knopf (9) aus seiner ersten verriegelten Position löst, wenn jeweilige Kontakte (13, 15) des Steckverbinders (2) und des Gegensteckverbinders (3) elektrisch verbunden sind.

3. Steckverbinderanordnung nach Anspruch 1 oder 2, wobei der Knopf (9) einen Gleitblock (16) umfasst, der mit der Gleitführung (22) zusammenwirkt, um die Bewegung des Knopfes (9) entlang einer Betätigungsrichtung (A) zwischen seiner ersten und seiner zweiten verriegelten Position zu führen.

4. Steckverbinderanordnung nach Anspruch 3, wobei die Blockiermittel (18) im Wesentlichen die Form von vorderen Nasen (23) und hinteren Nasen (24) haben, die mit dem Halteelement (25) zusammenwirken, und wobei die Blockiermittel (18) um eine zur Betätigungsrichtung (A) senkrechte Achse (X) drehbar sind.

5. Steckverbinderanordnung nach einem der vorhergehenden Ansprüche, wobei der Knopf (9) eine Abdeckung (17) umfasst, um eine in dem Kopf (26) der Schraube (6) angeordnete Ausnehmung (31), in die ein Werkzeug zum Anziehen oder Lösen der Schraube (6) eingeführt werden kann, zumindest teilweise zu verdecken, wenn sich der Knopf (9) in seiner zweiten Position befindet.

6. Steckverbinderanordnung nach Anspruch 5, bei der die Abdeckung (17) elastisch mit dem Kopf (26) der Schraube (6) zusammenwirkt, um den Knopf (9) in seiner zweiten Position zu halten.

7. Steckverbinderanordnung nach einem der vorhergehenden Ansprüche, wobei der Knopf (9) aus einem einzigen Stück gefertigt ist.

## Revendications

1. Ensemble connecteur comprenant un connecteur (2) et un connecteur complémentaire (3), ce connecteur (2) et ce connecteur complémentaire (3) étant fixés l'un à l'autre au moyen d'au moins une vis (6) comprenant une tige (27) engagée dans un orifice (10) disposé dans le connecteur (2) et une tête de vis (26) maintenue, par le connecteur (2), sur un côté de cet orifice (10), le connecteur (2) et le connecteur complémentaire (3) étant dans une position connectée avec la vis (6) dans une position de fixation finale, dans lequel un bouton (9) est assemblé sur le connecteur (2), le bouton (9) étant mobile entre une première position et une seconde position, **caractérisé en ce que**
• le bouton (9) comprend des pattes arrière (24) et **en ce que**
• la première position est une première position verrouillée et dans cette première position verrouillée, le bouton (9) autorise le vissage ou le dévissage de la vis (6) et le bouton (9) ne peut pas être déplacé si la vis (6) n'est pas dans la position de fixation finale, les pattes arrière (24) coopérant avec un élément de maintien (25) pour bloquer le mouvement du bouton (9),
• la seconde position est une seconde position verrouillée, dans lequel, pour que le bouton soit déplacé de la première position verrouillée à la seconde position verrouillée, le connecteur complémentaire (3) interagit avec le bouton (9) pour déplacer les pattes arrière (24), de sorte que les pattes arrière (24) échappent à l'élément de maintien (25) permettant au bouton (9) d'être libéré de sa première position verrouillée lorsque le connecteur (2) et le connecteur complémentaire (3) sont dans la position connectée avec la vis (6) dans une position de fixation finale.

2. Ensemble connecteur selon la revendication 1, dans lequel le connecteur complémentaire (3) libère le bouton (9) de sa première position verrouillée lorsque des contacts respectifs (13, 15) du connecteur (2) et du connecteur complémentaire (3) sont connectés électriquement.

3. Ensemble connecteur selon la revendication 1 ou 2, dans lequel le bouton (9) comprend un coulisseau (16) coopérant avec la glissière (22) pour guider le mouvement, le long d'une direction d'actionnement (A), du bouton (9) entre ses première et seconde positions verrouillées.

4. Ensemble connecteur selon la revendication 3, dans lequel les moyens de blocage (18) sont essentiellement sous la forme de pattes avant (23) et de pattes arrière (24) coopérant avec l'élément de maintien (25), et dans lequel les moyens de blocage (18) sont mobiles en rotation autour d'un axe (X) perpendiculaire à la direction d'actionnement (A).

5. Ensemble connecteur selon l'une quelconque des revendications précédentes, dans lequel le bouton (9) comprend un couvercle (17) pour masquer, au moins partiellement, lorsque le bouton (9) est dans sa seconde position, un évidement (31) disposé dans la tête (26) de la vis (6), dans lequel un outil peut être inséré pour visser ou dévisser la vis (6), lorsque le bouton (9) est dans sa seconde position.

6. Ensemble connecteur selon la revendication 5, dans lequel le couvercle (17) coopère élastiquement avec la tête (26) de la vis (6) afin de maintenir le bouton (9) dans sa seconde position.

7. Ensemble connecteur selon l'une quelconque des revendications précédentes, dans lequel le bouton (9) est formé d'une seule pièce.
